# EUROPEAN PATENT SPECIFICATION

(11) **EP 1 870 150 B1**
(45) Date of publication and mention of the grant of the patent: **03.05.2017**
(21) Application number: 07109425.4
(22) Date of filing: 01.06.2007
(51) Int. Cl.: B01D 39/04, B01D 39/06

(54) **Filter and process to prepare the same**
Filter und Herstellungsverfahren dafür
Filtre et son procédé de fabrication

(30) Priority: 23.06.2006 IN MU09882006
(43) Date of publication of application: 26.12.2007
(73) Proprietor: Unilever N.V., 3013 AL Rotterdam (NL); Unilever PLC, London EC4Y 0DY (GB)
(72) Inventor: Bansode, Sharadchandra Govind Hindustan Lever Ltd., Andheri (East) 400 099, Mumbai (IN); Srivastava, Madalasa Hindustan Lever Ltd., Andheri (East) 400 099, Mumbai (IN); Gupta, Arunima Hindustan Lever Ltd., Andheri (East) 400 099, Mumbai (IN)
(74) Representative: van den Brom, Coenraad Richard

(56) References cited:
- EP-A- 1 129 760
- WO-A-2005/056151
- WO-A-2005/094966
- DE-A1- 3 537 794
- US-A- 4 882 055

## Description

### Technical field

The present invention relates to filters, particularly for filtration of water under gravity and to a process for making such filters. The invention also relates to a gravity filtration device using the filter of the invention.

### Background and prior art

In urban areas, people receive water from a network of pipes, after being purified in municipal water treatment plants. This water is usually more fit for drinking as compared to drinking water available in smaller towns, villages and other rural areas. In these rural areas, water is directly collected from lakes, rivers and wells and there are few if any centralized water treatment plants. People have to individually purify the water collected by them. People usually resort to boiling to kill the germs. However, boiling is quite expensive and requires the use of fuel like coal, wood or oil which are scarce in rural areas. Many people use flocculants like alum, but these methods merely clarify the water but do not kill the germs. There have been many attempts to provide simple and inexpensive devices that can be used by a family to provide for their drinking water needs. One such type of household device is based on irradiating the feed water with ultraviolet radiation that kills the bacteria and virus. However such type of device requires the availability of power supply which is very often not available on a continuous basis especially in rural areas. Another type of household device is based on filtration through a membrane. This type of device which is based on the principle of reverse osmosis also requires the availability of power supply and water pressure. In the rural areas, water is usually not available at high pressure. Water is usually collected from the lakes, rivers and wells in pots and carried by hand to the households.

Many attempts have been made to provide water purification devices that do not need availability of power supply or high pressure water. However, most of those devices do not meet the stringent requirements set by international agencies like WHO which is needed to be met to ensure that water is safe for human consumption so that people can lead a life free of water borne diseases. The water generally needs to be free of dispersed mud and soil, dissolved salts, dispersed organic matter like humic acids from soil, solvents, pesticides and pesticide residues, and pathogenic organisms like cysts, bacteria and virus. WO2005095284 discloses one such device which claims to meet removal of the above contaminants to a sufficient extent to meet the stringent WHO specifications. This publication WO2005095284 describes a gravity fed water purification system comprising a filtration unit for filtering particulate and soluble material from the input water, a chemical dispensing unit for controlled dispensing of a biocide into the water followed by a retention chamber for retaining the treated water for a predetermined period of time before the water exits the purification system through a scavenger means for removing the dispensed biocide from the water. The filtration unit in the above publication is preferably a carbon block made by moulding activated carbon particles along with a polymeric binder at high temperature and pressure. The base plate of the carbon block is usually made of a thermoplastic material like polypropylene, polyethylene, acrylonitrile butadiene styrene (ABS) or styrene acrylonitrile (SAN). These base plates are usually glued on to the carbon block using glues like hot melt adhesives.

US4753728 (Amway 1988) describes a carbon particle filter comprising carbon particles bonded into a filter block by a low melt index polymeric material having a melt index of less than 1 gram per 10 minutes as determined by ASTM D1238 at 190 degree C, and 15 kilograms load, whereby said polymeric material will tackify at elevated temperatures without becoming sufficiently liquid to substantially wet the carbon particles. The end plates in this publication are separately moulded in slush molds by dipping the moulded carbon block in a pool of melted polypropylene. The process described is a multistep process and involved manufacturing complexities.

The present inventors have found that there are several disadvantages of filter blocks made with end plates glued/moulded on externally. Firstly there is a high degree of unreliability in this process of external gluing. The chances of leakage are high. Further the end plate has to be sealed to the water filtration device using rubber gaskets. In such a method of sealing, the tolerance in the angle at which the end plate is glued to the carbon block is very low. What this means is that the variation in the angle of the end plate to the axis of the carbon block over a large number of filters manufactured has to be very small, to minimize the amount of quality rejections. Further it has been observed that the multi step process comprising moulding the carbon block followed by gluing the end plate is rather cumbersome for the manufacturing teams. This complexity along with the concomitant high rejection rates made for the prior art process of making these filters and the resultant filters rather expensive.

The present inventors have found that it is possible to manufacture filters comprising filter blocks in a simple and inexpensive manner by moulding the filter block and the end plate in a single step process by using polymeric binders for the filter block and a polymer for the end plate both meeting a selective specification. The present inventors have found that it is possible to overcome most of the disadvantages of such types of filters manufactured in the past.

### Objects of the invention

It is thus an object of the present invention to provide for a moulded filter that is more reliable and is prone to fewer leaks as compared to similar types of prior art filters.

It is another object of the present invention to provide for a filter which is prone to fewer leaks, but at the same time is less expensive, as compared to similar prior art filters..

It is yet another object of the present invention to provide for a less expensive and more reliable filter block based filter that can be manufactured using a process that is simpler as compared to similar filters manufactured in the past.

### Summary of the invention

Thus according to the first aspect of the invention there is provided a process for making a filter comprising the steps of
- placing polymer with a melt flow rate of less than 5 grams/10minutes and of desired thickness of an end plate in a mould;
- mixing particulate filter media and polymeric binder having a melt flow rate less than 5 grams/10 minutes;
- adding the mixture of step (b) to the mould;
- heating said mold to a temperature in the range 150°C to 350°C demolding the molded filter.

The invention further provides a filter comprising: a filter block comprising filter particulate filter media and polymeric binder having melt flow rate less than 5 grams/10 minutes; and an end plate integrally moulded to said filter block, said end plate having a port for passage of liquid and made of a polymer having melt flow rate less than 5 grams/10 minutes.

Most suitable particulate filter media as per the invention is activated carbon particles.

It is particularly preferred that the liquid to be filtered is water. It is further particularly preferred that the water is filtered under gravity.

According to a second aspect of the invention there is provided the use of said filter in a gravity filtration device comprising a top chamber and a bottom chamber; the filter according to the first aspect of the invention detachably attachable to base of said top chamber; a sediment filter capable of removing suspended particulate material detachably mountable on said filter; such that liquid fed to the top chamber is filtered through said sediment filter and said filter before collecting in said bottom chamber.

According to a third aspect of the invention there is provided the use of said filter in a gravity filtration device comprising
(a) a top chamber and a bottom chamber;
(b) a first filter detachably attachable to base of said top chamber;
(c) a sediment filter capable of removing suspended particulate material detachably mountable on said first filter;
(d) a biocide feeder;
(e) a retention chamber and
(f) a second filter
such that liquid fed to said top chamber is filtered through said sediment filter and said first filter before being treated with a biocide fed by said biocide feeder, the biocide treated liquid is then retained in said retention chamber for a predetermined period of time, after which the retained liquid is filtered free of excess biocide through the second filter before collecting in said bottom chamber, wherein said first filter or said second filter or both are filters as per the first aspect of the invention.

These and other objects, advantages, and features of the invention will be readily understood and appreciated by reference to the non-limiting detailed description of the preferred embodiment.

### Detailed description of the invention

The invention provides for filter comprising a filter block comprising particulate filter media and polymeric binder having specific selective characteristics and an end plate integrally moulded to the filter block, the end plate made of a polymer having a specific selective characteristic and the end plate has a port for passage of liquid.

Particulate filter media according to the invention is preferably selected from the group consisting of diatomaceous earth, ceramic beads, clay, glass bead, polystyrene resin bead, or activated carbon, more preferably the particulate filter media is activated carbon.

Activated carbon is preferably selected from one or more of bituminous coal, coconut shell, wood and petroleum tar. Surface area of the activated carbon preferably exceeds 500 m²/g, more preferably exceeds 1000 m²/g. Preferably, the activated carbon has a size uniformity co-efficient of less than 2, more preferably less than 1.5, Carbon Tetrachloride number exceeding 50%, more preferably exceeding 60%. The activated carbon preferably has an Iodine number greater than 800, more preferably greater than 1000.

The particle size of the particulate filter media is selected such that preferably not more than 5% particles pass through a sieve of 30 mesh and not more than 5% is retained on a sieve of 12 mesh.

Both the polymeric binder and the polymer of the end plate are selected such that they have a melt flow rate less than 5 gram/10 minutes, more preferably less than 2 gram/10 minutes and further more preferably less than 1 gram/10 minutes. The melt-flow rate (MFR) is measured using ASTM D 1238 (ISO 1133) test. The test measures the flow of a molten polymer through an extrusion plastometer under specific temperature and load conditions. The extrusion plastometer consists of a vertical cylinder with a small die of 2 mm at the bottom and a removable piston at the top. A charge of material is placed in the cylinder and preheated for several minutes. The piston is placed on top of the molten polymer and its weight forces the polymer through the die and on to a collecting plate. The time interval for the test ranges from 15 seconds to 15 minutes in order to accommodate the different viscosities of plastics. Temperatures used are 190, 220, 250 and 300 °C (428, 482 and 572°F). Loads used are 1.2, 5, 10 and 15 kg. As per the present invention the tests are done at 190 °C at 15 kg load. The amount of polymer collected after a specific interval is weighed and normalized to the number of grams that would have been extruded in 10 minutes: melt flow rate is expressed in grams per reference time.

Suitable examples of polymeric binder and polymer include ultra high molecular weight polymer preferably polyethylene, polypropylene and combinations thereof, which have these low MFR values. The molecular weight is preferably in the range of 10⁶ to 10⁹ g/mole. Binders of this class are commercially available under the trade names HOSTALEN from Tycona GMBH, GUR, Sunfine (from Asahi, Japan), Hizex (from Mitsubishi) and from Brasken Corp (Brazil). Other suitable binders include LDPE sold as Lupolen (from Basel Polyolefins) and LLDPE from Qunos (Australia).

According to an optimal aspect of the invention the polymeric binder and the polymer of the end plate are the same material. The bulk density of the polymeric binder and the polymer are preferably less than or equal to 0.6 g/cm³, more preferably less than or equal to 0.5 g/cm³, and further more preferably less than or equal to 0.25 g/cm³.

It has been observed that if the end plate polymer has a Melt Flow Rate greater than 5 grams/10 minutes, it is difficult to release the filter from the mould. This problem can be alleviated if the filter block surface is made very smooth or a very small clearance is provided between the filter block and the mould. Achieving these stringent process conditions are often very difficult in a large scale manufacturing facility. Thus use of a polymer for the end plates having the selective characteristics as per the invention provides for smooth and efficient demoulding.

The particle size of the polymeric binder is preferably selected such that the average particle size of the polymeric binder particles is in the range of 100 to 180 microns.

The filter block preferably comprises 50-95% particulate filter media and 5-50% polymeric binder by weight of the filter block.

The above disclosed filter of the invention is adapted to provide for removal of chemical contaminants and for effective removal of at least 3-log i.e. 99.9% of cysts such as *Giardia lamblia, Cryptospordirium parvum* and *Entamoeba histolica.* That is to say, if the input water contains 1000 cysts, the output water will contain at the most only 1 cyst. The filter of the invention is also suitable as a scavenger for removal of balance biocide and halogens like chlorine, bromine or iodine from water treated with such biocide. Thus such biocide kills the germs in the feed water and the balance biocide can be scavenged by the filter of the invention thus making the treated water highly suitable for human consumption.

The filter of the invention preferably comprises a second end plate integrally moulded to filter block, said second end plate made of a polymer having a melt flow rate less than 5 grams/10 minutes. The second end plate optionally has a port for passage of liquid.

The filter block can be of any desired shape depending on the end application/ use. Suitable shapes include flat circular disc, square disc, tapered flat disc, cylindrical, hollow cylindrical, solid conical, hollow hemispherical and hollow cone.

According to a second aspect of the invention there is provided a gravity filtration device comprising a top chamber and a bottom chamber; the filter according to the first aspect of the invention detachably attachable to base of said top chamber; a sediment filter detachably mountable on said filter; such that liquid fed to the top chamber is filtered through said sediment filter and said filter before collecting in said bottom chamber.

According to a third aspect of the invention there is provided a gravity filtration device comprising a top chamber and a bottom chamber; a first filter detachably attachable to base of said top chamber; a sediment filter detachably mountable on said first filter; a biocide feeder; a retention chamber and a second filter; such that liquid fed to said top chamber is filtered through said sediment filter and said first filter before being treated with a biocide fed by said biocide feeder, the biocide treated liquid is then retained in said retention chamber for a predetermined period of time, after which the retained liquid is filtered free of excess biocide through said second filter before collecting in said bottom chamber wherein said first filter or said second filter or both are filters as per the first aspect of the invention.

The sediment filter is generally capable of removing dissolved and dispersed organic matter in the feed liquid and particulate matter having a size greater than 3 microns. The sediment filter is washable and removable and is preferably made of a woven or non-woven fabric, more preferably a non-woven fabric having micro porous structure. The sediment filter can be washed and rinsed under flowing tap water or by using a small amount (0.1-10 g/L) of fabric wash detergent in water. This facilitates wide and extensive application of the filter of the invention. According to yet another aspect of the present invention there is provided a process for making a filter comprising the steps of placing polymer to desired thickness of an end plate in a mould; mixing particulate filter media and polymeric binder having a melt flow rate less than 5 grams/10 minutes; adding the mixture of step (b) to the mould; heating said mold to a temperature in the range 150°C to 350°C; and demolding the molded filter.

The polymeric binder and said activated particulate filter media are mixed for at least 15 minutes, more preferably for a period of time from 20 to 60 minutes before adding to the mould. Mixing is preferably done in vessels which include an agitator, mixer with dulled impeller blades, ribbon blender, rotary mixer, sigma mixer or any other low shear mixer that does not significantly alter the particle size distribution. Any of the above mentioned powder mixers may be used for this purpose but a suitable mixer is a sigma mixer. It is optional but preferred that this step of mixing is carried out in the presence of a fluid e.g water or an organic solvent like an alcohol. The amount of fluid used is preferably not more that 4 times the amount of activated carbon particles by weight, and more preferably not more than 3 times, most preferably from 0.5 to1.5 times.

The above mixture is preferably not vibrated, however, vibrating the mixture for a short period, e.g. 3-10 minutes can also be used to ensure that mixture, before moulding, becomes compact. The vibratory compaction is preferably carried out in a vibrator having a frequency in the range of 30 to 100 Hz. This process step is preferably carried out for a period of at least one minute, more preferably for 3 to 10 minutes. The compacted mass is then placed in a mould of pre-selected size and shape.

The mould is made of aluminum, cast iron, steel or any material capable of withstanding temperatures exceeding 400 °C.

A mould release agent is preferably coated on the inside surface of the mould. The mould release agent is preferably selected from silicone oil, aluminum foil, or the mould can be coated with suitable materials like Teflon or any other commercially available mould release agent that has little or no adsorption onto the filter medium.

More preferred temperatures for thermosetting the filter in the process of the invention is from 200°C to 300 °C.The mould is kept heated for more than 60 minutes, preferably 90 to 300 minutes. The mould is preferably heated in an oven using a non-convection, forced air or forced inert-gas convection oven.

The mould is then cooled and the moulded filter released from the mould.

A second end plate may be integrally moulded on to the carbon block by placing polymer to desired thickness of the second end plate in the mould.

The process of the invention optionally comprises compressing the mould before the heating step. When compression is applied, the pressure is preferably not more than 12 Kg/cm², more preferably in the range of from 4 to 8 kg/cm². The pressure is preferably applied using either a hydraulic press or a pneumatic press, more preferably a hydraulic press.

The polymer used for the end plates may be added in the form of particles in the mould or may be premoulded into a desired shape before placing in the mould.

This and other objects of the invention, its' advantages and method use will now be described with the help of the following figures. The figures depicted and described herein form an embodiment of the invention and has been incorporated for illustrative purpose only. These should not be construed so as to limit the invention in any manner, as it would be obvious to the reader that many such embodiments are possible without diverting from the scope of the invention. In light thereof, variations and modifications will be suggested to one skilled in the art, all of which are within the spirit and purview of this invention.

### Brief Description of the Figures

Figure-1 is a front view of an embodiment of the filter as per the invention comprising a carbon block.
Figure-2 is a top view of the embodiment of Figure-1.

### Detailed Description of the Figures

Figure -1 depicts an embodiment of a filter (F) comprising a carbon block (CB). The carbon block of this embodiment has a cylindrical shape with a central hallow bore along the longitudinal axis. A first end plate (FEP) is integrally moulded to the top end of the carbon block. A water impervious second end plate (SEP) is integrally moulded to the bottom of the carbon block. The first end plate comprises a port (PO) for passage of water therethrough. A cylindrical pipe (P) made of rigid polymer having holes on the circumferential surface is inserted in the central hollow bore to provide structural support to the carbon block and facilitate flow of water. A gasket (G) is provided on the first end plate (FEP) to enable fixing the carbon block into the filter. Threadings (T) provided on the pipe (P) enable attaching the filter on to a filtration device.

The filter (F) is prepared by the following process. A cylindrical mould having the shape and configuration of the filter as shown in Figure-1 is taken. A premoulded water impervious second end plate (SEP) is placed at the bottom of the mould. The second end plate is made of ultra high molecular weight polyethylene having a molecular weight of 10⁶ and a melt flow rate of (MFR) of approximately 0 grams/10 minutes, procured from Tycona GMBH. Activated carbon particles having a particle size such that not more than 5 wt% is retained on 12 mesh and not more than 5% passes through 30 mesh is mixed with particles of ultra high molecular weight polyethylene having an MFR ∼ 0 having an average particle size of 140 microns in a ratio of 6.5: 1 in a sigma mixer for 30 minutes. The mixture is then added to the mould while ensuring that a solid metal pipe having the dimensions of the pipe (P) are placed in the mould along the longitudinal axis. Powder of ultra high molecular weight polyethylene having an MFR ∼ 0 to a height corresponding to the desired height of the first end plate (FEP) is then added. The mould is then compressed to a pressure of 5-8 kg/cm² and heated in a furnace to a temperature in the range of 200 to 280 °C for 2.5 hours. The mould is then cooled and the carbon block demoulded. The solid metal pipe is then removed and the pipe (P) is then placed in the central bore followed by the gasket (G). The filter is then screwed on a desired water filtration device using threads (T).

Figure-2 depicts the top view of the filter as per Figure-1 with the parts labeled using the same legends.

When in use, water enters through inlet (I) and flows in the directions depicted by the arrows. The water is filtered as it flows radially inward into the central bore of the carbon block. The filtered water then exits through exit (E).

The invention thus provides for a carbon block filter media, a process for preparing the same and water filters which can be prepared using such carbon blocks which provide for the desired filtration efficiency of water under gravity flow conditions while providing the desired high flow rate.

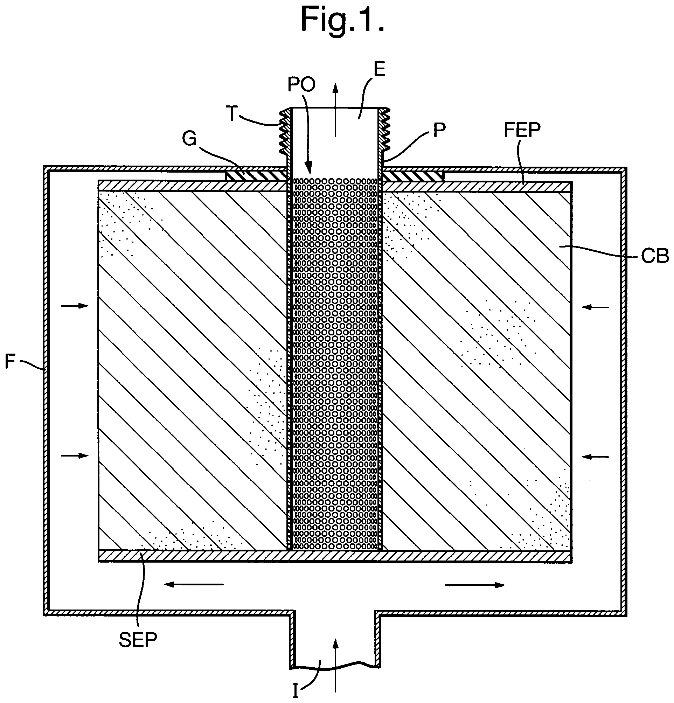

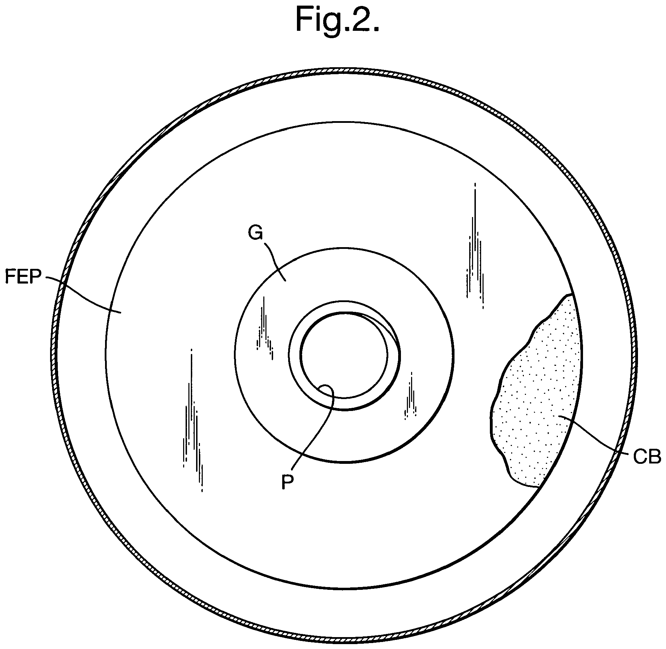

## Claims

1. A process for making a filter **characterised by** comprising the steps of
a. placing polymer with a melt flow rate of less than 5 grams/10 minutes and of desired thickness of an end plate in a mould;
b. mixing particulate filter media and polymeric binder having a melt flow rate less than 5 grams/10 minutes;
c. adding the mixture of step (b) to the mould;
d. heating said mold to a temperature in the range 150°C to 350°C
e. demolding the molded filter.

2. A process as claimed in claim 1 **characterised by** comprising placing polymer to desired thickness of a second end plate in the mould.

3. A process as claimed in claim 1 or claim 2 **characterised by** comprising compressing said mould before heating the mould.

4. A process as claimed in claim 3 **characterised in that** said mould is compressed in the mould by applying a pressure of not more than 12 Kg/cm².

5. A process as claimed in claim 4 **characterised in that** said pressure is from 4 to 8 kg/cm².

6. A process as claimed in any one of the preceding claims 1 to 5 **characterised in that** the polymer of the end plate is premoulded into a desired shape before placing in the mould.

7. A process as claimed in any one of the preceding claims 1 to 5 **characterised in that** the polymer of the end plate is in the form of particles when placed in the mould.

8. A process as claimed in any one of preceding claims 1 to 7 characterised said mould is heated to a temperature from 200 °C to 300 °C.

9. A process as claimed in any one of the preceding claims 1 to 8 **characterised in that** said polymeric binder and said particulate filter media are mixed for at least 15 minutes.

10. A process as claimed in claim 9 **characterised in that** said mixing is carried out for 20 to 60 minutes.

11. A process as claimed in any one of the preceding claims 1 to 10 **characterised in that** said mixing is done in a sigma mixer.

12. A filter obtainable by the process of anyone of claims 1 to 11, **characterised by** comprising:
a. a filter block comprising particulate filter media and polymeric binder having melt flow rate less than 5 grams/10 minutes; and
b. an end plate integrally moulded to said filter block, said end plate having a port for passage of liquid and made of a polymer having a melt flow rate less than 5 grams/10 minutes.

13. A filter according to claim 12, **characterised in that**
a. said particulate filter media are activated carbon particles wherein not more than 5% of said particles pass through a sieve of 30 mesh and not more than 5% is retained on a sieve of 12 mesh; and
b. said filter block comprises 50-95% particulate filter media and 5-50% polymeric binder by weight of the filter block; and
c. said polymeric binder and the polymer of the end plate are ultra high molecular weight polyethylene or ultra high molecular weight polypropylene or mixture thereof and said polymeric binder has a melt flow rate less than 1 gram/10 minutes and the molecular weight of said polymeric binder and the polymer of the end plate ranges from 10⁶ to 10⁹ g/mole and wherein the average particle size of the polymeric binder particles is in the range of 100 to 180 microns.

14. Use of the filter according to any one of claims 12 or 13 in a gravity filtration
device **characterised by** comprising:
a. A top chamber and a bottom chamber;
b. a filter as claimed in any one of the preceding claims detachably attachable to base of said top chamber;
c. a sediment filter capable of removing suspended particulate material detachably mountable on said filter;
d. such that liquid fed to the top chamber is filtered through said sediment filter and said filter before collecting in said bottom chamber.

15. Use according to claim 14, whereby said gravity filtration device further comprises:
d. a biocide feeder;
e. a retention chamber and
f. a second filter
g. such that liquid fed to said top chamber is filtered through said sediment filter and said first filter before being treated with a biocide fed by said biocide feeder, the biocide treated liquid is then retained in said retention chamber for a predetermined period of time, after which the retained liquid is filtered free of excess biocide through said second filter before collecting in said bottom chamber **characterised in that** said first filter or said second filter or both are filters as per claims 12 or 13.

## Patentansprüche

1. Verfahren zum Herstellen eines Filters, **gekennzeichnet durch** den Einbezug der Schritte:
a. Legen eines Polymers mit einem Schmelzflussindex von weniger als 5 Gramm/10 Minuten und einer gewünschten Dicke einer Stirnplatte in eine Form;
b. Mischen von partikelförmigen Filtermedien und polymerem Bindemittel mit einem Schmelzflussindex von weniger als 5 Gramm/10 Minuten;
c. Hinzufügen der Mischung von Schritt (b) zu der Form;
d. Erwärmen der Form auf eine Temperatur im Bereich von 150 °C bis 350 °C;
e. Entnehmen des ausgeformten Filters aus der Form.

2. Verfahren nach Anspruch 1, **gekennzeichnet durch** das Anordnen eines Polymers bis zu einer gewünschten Dicke einer zweiten Stirnplatte in der Form.

3. Verfahren nach Anspruch 1 oder Anspruch 2, **gekennzeichnet durch** das Komprimieren der Form vor ihrem Erwärmen.

4. Verfahren nach Anspruch 3, **dadurch gekennzeichnet, dass** die Form durch Anwenden eines Drucks von nicht mehr als 12 kg/cm² in der Form komprimiert wird.

5. Verfahren nach Anspruch 4, **dadurch gekennzeichnet, dass** der Druck zwischen 4 und 8 kg/cm² liegt.

6. Verfahren nach irgendeinem der vorhergehenden Ansprüche 1 bis 5, **dadurch gekennzeichnet, dass** das Polymer der Stirnplatte in eine gewünschte Form vorgeformt wird, bevor es in der Form eingebracht wird.

7. Verfahren nach irgendeinem der vorhergehenden Ansprüche 1 bis 5, **dadurch gekennzeichnet, dass** das Polymer der Stirnplatte die Form von Teilchen hat, wenn es in der Form eingebracht wird.

8. Verfahren nach irgendeinem der vorhergehenden Ansprüche 1 bis 7, **dadurch gekennzeichnet, dass** die Form auf eine Temperatur von 200 °C bis 300°C erwärmt wird.

9. Verfahren nach irgendeinem der vorhergehenden Ansprüche 1 bis 8, **dadurch gekennzeichnet, dass** das polymere Bindemittel und die partikelförmigen Filtermedien für mindestens 15 Minuten gemischt werden.

10. Verfahren nach Anspruch 9, **dadurch gekennzeichnet, dass** das Mischen für 20 bis 60 Minuten ausgeführt wird.

11. Verfahren nach irgendeinem der vorhergehenden Ansprüche 1 bis 10, **dadurch gekennzeichnet, dass** das Mischen in einem Sigma-Mischer ausgeführt wird.

12. Filter, der durch das Verfahren nach irgendeinem der Ansprüche 1 bis 11 erhältlich ist, **gekennzeichnet durch**:
a. einen Filterblock, der partikelförmige Filtermedien und polymeres Bindemittel mit einem Schmelzflussindex von weniger als 5 Gramm/10 Minuten umfasst; und
b. eine Stirnplatte, die an den Filterblock aufgepresst ist, wobei die Stirnplatte einen Anschluss für den Durchfluss von Flüssigkeit aufweist und aus einem Polymer mit einem Schmelzflussindex von weniger als 5 Gramm/10 Minuten hergestellt ist.

13. Filter nach Anspruch 12, **dadurch gekennzeichnet, dass**
a. die partikelförmigen Filtermedien aktivierte Kohlenstoffteilchen sind, wobei nicht mehr als 5 % der Teilchen durch ein Filtersieb mit einer Maschenweite von 30 gelangen und nicht mehr als 5 % auf einem Filtersieb mit einer Maschenweite von 12 zurückgehalten werden; und
b. der Filterblock 50-95 % partikelförmige Filtermedien und 5-50 % Gewichtsprozent des Filterblocks polymeres Bindemittel umfasst; und
c. das polymere Bindemittel und das Polymer der Stirnplatte ultrahochmolekulares Polyethylen oder ultrahochmolekulares Polypropylen oder eine Mischung davon sind und das polymere Bindemittel einen Schmelzflussindex von weniger als 1 Gramm/10 Minuten besitzt und das Molekulargewicht des polymeren Bindemittels und des Polymers der Stirnplatte in einem Bereich von 10⁶ bis 10⁹ g/Mol liegt und wobei die mittlere Teilchengröße der Teilchen der polymeren Bindemittelteilchen in dem Bereich von 100 bis 180 Mikrometer liegt.

14. Verwendung des Filters nach irgendeinem der Ansprüche 12 oder 13 in einer Gravitationsfiltrationsvorrichtung, **gekennzeichnet durch**:
a. eine obere Kammer und eine untere Kammer;
b. einen Filter nach einem der vorhergehenden Ansprüche, der an der Basis der oberen Kammer abnehmbar angebracht werden kann;
c. einen Sedimentfilter, das suspendiertes partikelförmiges Material entfernen kann und das an dem Filter abnehmbar angebracht werden kann;
d. so dass eine Flüssigkeit, die in die obere Kammer eingespeist wird, **durch** das Sedimentfilter und den Filter gefiltert wird, bevor sie in der unteren Kammer gesammelt wird.

15. Verwendung nach Anspruch 14, wobei die Gravitationsfiltrationsvorrichtung ferner Folgendes umfasst:
d. eine Biozid-Einspeiseeinrichtung;
e. eine Zurückhaltekammer und
f. einen zweiten Filter;
g. so dass eine Flüssigkeit, die in die obere Kammer eingespeist wird, durch den Sedimentfilter und den ersten Filter gefiltert wird, bevor sie mit einem Biozid behandelt wird, das durch die Biozid-Einspeiseeinrichtung eingespeist wird, wobei die biozidbehandelte Flüssigkeit dann in der Zurückhaltekammer für eine vorgegebene Zeitdauer zurückgehalten wird, wonach die zurückgehaltene Flüssigkeit durch den zweiten Filter frei von überschüssigem Biozid gefiltert wird, bevor sie in der unteren Kammer gesammelt wird, **dadurch gekennzeichnet, dass** der erste Filter und/oder der zweite Filter Filter nach den Ansprüchen 12 oder 13 darstellen.

## Revendications

1. Procédé de fabrication d'un filtre **caractérisé en ce qu'**il comprend les étapes de
a. disposition de polymère avec un indice de fusion inférieur à 5 grammes/10 minutes et d'épaisseur souhaitée d'une plaque d'extrémité dans un moule ;
b. mélange de milieux de filtres particulaires et de liant polymère ayant un indice de fusion inférieur à 5 grammes/10 minutes ;
c. addition du mélange de l'étape (b) dans le moule ;
d. chauffage dudit moule à une température dans l'intervalle de 150°C à 350°C
e. démoulage du filtre moulé.

2. Procédé selon la revendication 1, **caractérisé en ce qu'**il comprend la disposition de polymère jusqu'à une épaisseur souhaitée d'une seconde plaque d'extrémité dans le moule.

3. Procédé selon la revendication 1 ou la revendication 2, **caractérisé en ce qu'**il comprend la compression dudit moule avant chauffage du moule.

4. Procédé selon la revendication 3, caractérisé en que ledit moule est comprimé dans le moule par application d'une pression d'au plus 12 kg/cm².

5. Procédé selon la revendication 4, caractérisé en que ladite pression est de 4 à 8 kg/cm².

6. Procédé selon l'une quelconque des revendications 1 à 5 précédentes, **caractérisé en ce que** le polymère de la plaque d'extrémité est prémoulé dans une forme souhaitée avant disposition dans le moule.

7. Procédé selon l'une quelconque des revendications 1 à 5 précédentes, **caractérisé en ce que** le polymère de la plaque d'extrémité est dans la forme de particules lorsqu'il est disposé dans le moule.

8. Procédé selon l'une quelconque des revendications 1 à 7 précédentes, caractérisé en que ledit moule est chauffé à une température de 200°C à 300°C.

9. Procédé selon l'une quelconque des revendications 1 à 8 précédentes, **caractérisé en ce que** ledit liant polymère et lesdits milieux de filtres particulaires sont mélangés pendant au moins 15 minutes.

10. Procédé selon la revendication 9, **caractérisé en ce que** ledit mélange est réalisé pendant de 20 à 60 minutes.

11. Procédé selon l'une quelconque des revendications 1 à 10 précédentes, caractérisé en que ledit mélange est réalisé dans un mélangeur sigma.

12. Filtre pouvant être obtenu par le procédé selon l'une quelconque des revendications 1 à 11, **caractérisé en ce qu'**il comprend :
a. un bloc de filtre comprenant des milieux de filtres particulaires et un liant polymère ayant un indice de fusion inférieur à 5 grammes/10 minutes ; et
b. une plaque d'extrémité intégralement moulée audit bloc de filtre, ladite plaque d'extrémité ayant un orifice pour le passage de liquide et constituée d'un polymère ayant un indice de fusion inférieur à 5 grammes/10 minutes.

13. Filtre selon la revendication 12, **caractérisé en ce que**
a. lesdits milieux de filtres particulaires sont des particules de charbon actif dans lesquelles au plus 5 % desdites particules passent à travers un tamis de 30 mesh et au plus 5 % sont retenus par un tamis de 12 mesh ; et
b. ledit bloc de filtre comprend 50-95 % de milieux de filtres particulaires et 5-50 % de liant polymère en masse du bloc de filtre ; et
c. ledit liant polymère et le polymère de la plaque d'extrémité sont du polyéthylène de masse moléculaire ultra élevée ou du polypropylène de masse moléculaire ultra élevée ou un mélange de ceux-ci et ledit liant polymère présente un indice de fusion inférieur à 1 gramme/10 minutes et la masse moléculaire dudit liant polymère et du polymère de la plaque d'extrémité est comprise entre 10⁶ et 10⁹ g/mole et dans lequel la taille moyenne de particule des particules de liant polymère se trouve dans l'intervalle de 100 à 180 microns.

14. Utilisation du filtre selon l'une quelconque des revendications 12 ou 13 dans un dispositif de filtration par gravité **caractérisée en ce qu'**elle comprend :
a. une chambre de haut et une chambre de fond ;
b. un filtre selon l'une quelconque des revendications précédentes pouvant être fixé de manière détachable à la base de ladite chambre de haut ;
c. un filtre de sédiment capable d'éliminer un matériau particulaire en suspension pouvant être fixé de manière détachable sur ledit filtre ;
d. de sorte que du liquide introduit dans la chambre de haut est filtré à travers ledit filtre de sédiment et ledit filtre avant recueil dans ladite chambre de fond.

15. Utilisation selon la revendication 14, sur quoi ledit dispositif de filtration par gravité comprend de plus :
d. un dispositif d'alimentation en biocide ;
e. une chambre de rétention et
f. un second filtre
g. de sorte que du liquide introduit dans ladite chambre de haut est filtré à travers ledit filtre de sédiment et ledit premier filtre avant d'être traité avec un biocide introduit par ledit dispositif d'alimentation en biocide, le liquide traité par le biocide est ensuite retenu dans ladite chambre de rétention pendant une période de temps prédéterminée, après quoi le liquide retenu est filtré à l'état exempt de biocide en excès par ledit second filtre avant recueil dans ladite chambre de fond **caractérisée en ce que** ledit premier filtre ou ledit second filtre ou les deux sont des filtres selon la revendication 12 ou 13.
